# EUROPEAN PATENT SPECIFICATION

(11) **EP 3 703 923 B1**
(45) Date of publication and mention of the grant of the patent: **02.04.2025**
(21) Application number: 18872538.6
(22) Date of filing: 30.10.2018
(51) Int. Cl.: B29C 43/18, B65D 35/14, B29C 45/14

(54) **IN-MOLD ASSEMBLY METHOD OF TUBULAR SHOULDER FOR TUBE CONTAINER**
IN-MOLD-ANORDNUNGSVERFAHREN VON ROHRFÖRMIGER SCHULTER FÜR ROHRBEHÄLTER
PROCÉDÉ D'ASSEMBLAGE DANS LE MOULE D'UN ÉPAULEMENT TUBULAIRE POUR RÉCIPIENT TUBULAIRE

(30) Priority: 03.11.2017 TH 1701006529
(43) Date of publication of application: 09.09.2020
(73) Proprietor: Kimpai Lamitube Co., Ltd., Sathorn, Bangkok 10120 (TH)
(72) Inventor: LIMATIBUL, Sumet, Bangkok 10120 (TH)
(74) Representative: Jones, Nicholas Andrew
(86) International application number: PCT/TH2018/000048
(87) International publication number: WO 2019/088934

(56) References cited:
- EP-A1- 1 033 318
- EP-B1- 1 033 318
- WO-A1-03/013965
- WO-A1-2017/078633
- FR-A1- 2 683 482
- GB-A- 1 518 307
- JP-A- 2001 139 041
- JP-A- S58 124 623
- US-A- 3 295 725
- US-A- 3 565 293
- US-A- 3 565 293
- US-A- 4 132 331
- US-A- 4 132 331
- US-A- 4 185 757
- US-A- 4 526 297
- US-A- 5 556 678
- US-A1- 2005 029 216
- US-A1- 2009 057 322
- US-A1- 2017 021 976

## Description

### TECHNICAL FIELD

The present invention is in the field of engineering and relates to an in-mold assembly method of a tubular shoulder for a tube container.

### BACKGROUND ART

A tube packaging consists of a tube body, a tube shoulder, and a cap part. Absorption of product components contained in the tube body into the tube body may be reduced by using a laminate structure including a barrier such as aluminium foil or barrier resins such as ethylene vinyl alcohol. The shoulder consists a great quantity of polymers or copolymers having a plurality of alkene groups. Therefore, a barrier is required to be located between the shoulder and the product contained in the tube. A polyethylene terephthalate (PET) shoulder insert or a polybutylene terephthalate (PBT) shoulder insert have been used for decades to enhance an oxygen barrier property.

Collapsible containers have been widely used for several years. US patent number 4,011,968 discovers a collapsible container comprising a tubular body made from a single blank of a flexible sheet material and an integral one-piece preformed non-metallic solid head member of thermoplastic material having an annular skirt telescoped within an end of said tube body, and an insert element of a material that is less subject to oxygen absorption and less permeable to the product in the tube body than the material of said head member tightly frictionally disposed within said head member. The head member is a premolded polyolefin unit, preferably polyethylene or polypropylene. A preformed barrier element, preferably molded of urea formaldehyde or an equivalent composition particularly resistant to oxygen absorption and product penetration, is mounted with a substantially friction tight fit within the head member.

US patent number 4,185,757 discloses a collapsible dispensing tube utilizing a locking taper resulting in a better bond between a headpiece, a barrier member, and an inner wall of the collapsible tube. Furthermore, US patent number 3,565,293 discloses a collapsible tube construction having a thermoplastic headpiece united to a preformed body, with an improved barrier means associated with the headpiece whereby product permeation and oxygen absorption through the headpiece are minimized. The headpiece is of a readily moldable thermoplastic material such as polyethylene. An insert disc is made from a material having very low permeability as well as product compatibility such as amino resins (urea formaldehyde). Certain thermoplastic materials noted for their impermeable character are polypropylene and the polyamides. Thermosetting and metal would be possible to prevent product protection and preservation.

EP patent number 0 463 658 B1 describes a method of making a tubular container for dispensing a paste product comprising forming a tube portion and a flexible shoulder portion, said shoulder portion formed by injection molding as a single piece, a nozzle portion extending upwardly from said shoulder portion having external threads, and a flat section covering the opening of said nozzle portion.

US patent number 5,656,346 concerns a packaging tube comprising a multi-layer pure plastic laminate and a sealing arrangement for tube heads for the packaging of materials with volatile substances such as flavoring or scent substances, which has a resistance to diffusion which is the same as or comparable to tubes which in their laminate structure have a metal layer as a diffusion barrier and which improves the recycling of tubes.

US patent application number 2005/0029216 A1 relates to a packaging container such as a tube, which is characterized in that a head of the tube is inter alia sealed by an interior annular element configured by a film material that engages with a shoulder of the head. The annular element is produced by pre-forming a plastic film annular element. The head also known to be a headpiece made of plastic material, preferably polyethylene, may be either pre-formed or formed in situ by a means of injection molding.

A method of an automated technique for making and inserting flexible laminate film barrier liners into a shoulder/nozzle of a product tube packaging is disclosed in US patent application number 2009/0324864. The film is fed to a station that forms the nozzle aperture, a die cuts the laminate film to fit into the shoulder of the shoulder/nozzle, and this laminate film is inserted into the shoulder/nozzle. The laminate film can be heat-bonded to the shoulder/nozzle at this station or in a subsequent sealing station. The laminate film will have a polymer layer and a barrier layer comprising ethylene vinyl alcohol copolymers, polyethylene terephthalate polymers, polyethylene naphthalate polymers, and acrylonitrile methyl-acrylate copolymers.

A method for manufacturing a head assembly comprising a tube head and a metal barrier insert is detailed in US patent application number 2014/0034672. Interestingly, US patent publication number 2017/0021976 shows a method for making barrier tube shoulders. The method includes extrusion blow molding (EBM) by an EBM mold comprising at least one cavity shaped as the barrier tube shoulder, positioning the parison in the EBM mold, and blow molding the parison such that the parison substantially conforms to the EBM mold to form the barrier tube shoulder having the barrier layer. The parison also includes a multi-layer laminated structure having an inner layer that faces an interior of the parison, an outer layer comprising an exterior surface of the parison, and an interdisposed layer between the inner layer and the outer layer, wherein the interdisposed layer is a flavor barrier layer.

GB1518307 describes a method of producing a double-walled collapsible tubular container, including inserting a core into a double-walled tube body having a shoulder and a mouth section, the tube body having a thermoplastic inner tube member which has a trumpet-shaped diverging portion at the mouth end of the tubular container and a thin-walled metal outer tube member, the core having an outer configuration corresponding to the inner configuration of the tube body; surrounding the exterior of the tube body with mold sections having an inner configuration corresponding to the outer configuration of a rim section to be formed at least at the top portion of the tube body, thereby defining a cavity to mold the rim around the said diverging portion; and injecting into the said cavity a molten thermoplastic resin whereby the said rim is formed on at least the top portion of the tubular container with the said diverging portion embedded therein.

However, in the prior art, the tube shoulder having the insert as the formed barrier is likely to be deteriorated resulting in the fact that the product contained within the tube can be overflowed or leaked from joints of the tube shoulder into gaps formed between layers of the tube.

### SUMMARY OF THE INVENTION

The present invention relates to a method for producing a tubular shoulder comprising the following steps:
(1) preparing an inner element by injection molding of an inner-element forming composition in a first mold;
(2) disposing the formed inner element on a mandrel in a second mold;
(3) injecting an outer-element forming composition into the second mold, such that said composition is injected, while it is hot, onto the held inner element; and
(4) bonding the inner element and the outer element together by compression, while the outer element still has a high temperature,
wherein an output resulting from said molding is formed to be the tubular shoulder having the inner element and the outer element bonded together by the in-mold assembly method.

A tube shoulder is produced such that absorption of product components contained therein that come into contact with the shoulder area is reduced, and the tube packaging is suitable for filling with contents of the various products such as toothpastes, cosmetics, foodstuffs, medicines, and the like.

The tubular shoulder has a high degree of resistance to scent loss. The method according to this invention provides the tube shoulder area that is difficult to cause leakage through gaps formed between the outer element and the inner element of the tube shoulder.

### BRIEF DESCRIPTION OF THE DRAWINGS

Fig.1 shows a figure of an outer element and an inner element of a tube shoulder, and
Fig.2 shows a figure of the tube shoulder after being subjected to an in-mold assembly method in accordance with this invention.

### DETAILED DESCRIPTION

A means of improving utilization of an insert element (inner element) at a tube shoulder area is described. The insert element is generally made separately from a special material and serves as a barrier material. However, detachment of the insert element of the shoulder insert inside the tube may occur after a consumer uses the tube for dispensing a product contained therein at home. Therefore, this invention can solve all problems related to the presence of the insert element in regard to shelf life, compatibility of materials, and important aspects of barrier properties at the shoulder area.

The plastic shoulder of the tube assures a simple, hygienic and safe form of packaging. The design and materials of the plastic shoulder of the tube are appropriate especially for chemical, cosmetic and pharmaceutical industries, namely toothpastes, creams, pastes and the like. An injection- or compression-molded polyethylene shoulder of the tube is known for capability of permeation of scents and fragrances, oxygen, and carbon dioxide. The tube body made normally of a laminated structure is arranged, wherein a gas barrier layer and a base material layer are made of synthetic resins. For this reason, the tube head has to be improved in order to obtain a diffusion resistance comparable to that of the tube body. In order to provide additional functionality for the product contained in the laminate tube, the plastic shoulder is often assembled with a plastic insert such as polyester (PET). The reason for mounting the insert inside the plastic shoulder may be related to product lifetime (no oxidation) and various characteristics.

Also described is a tubular shoulder comprising:
- an inner element prepared by molding in the first mold;
- an outer element prepared by molding in the second mold, wherein the prepared outer element is tightly bonded to the inner element within the second mold by heating, wherein the tubular shoulder is formed by an in-mold assembly method, so that the inner element and the outer element are bonded together.

According to the invention, said inner element and outer element are formed by an in-mold assembly method, wherein said in-mold assembly may optionally use overmolding.

The in-mold assembly (IMA) method is more than just overmolding or insert molding, even though either or both can be a part of an IMA process. Although the in-mold assembly method generally requires multiple shots, the essence of this concept is putting together inside the mold of separated components that would otherwise be assembled outside the mold through snap-fitting, welding, or adhesive bonding.

According to another embodiment of this invention, said inner element and outer element are formed by an in-mold assembly method, wherein said in-mold assembly may optionally use insert molding such that the premolded inner element is inserted while the outer element is still melting.

In regard to a form of the insert molding, the outer element of the tube head is formed by injection or compression molding, whereas an inserted component is a barrier material such as polyester (PET). Head sealing according to a means of this invention are fitted in the performed shape during the injection or compression operation to form the head, and a joint(s) is subjected to the same as the tube body, then they are joined to the head by radiating or heat contacting or external heating, by fusing the PET insert thereto or thereon.

In this invention, in regard to a form of the overmolding process, the shoulder may be made separately, then it is reinforced in order to attach to the tube body. The overmolding is a process where a tube shoulder is constructed by using two or more different materials in combination. Typically, the first material, sometimes referred to as the substrate (inner element), is almost fully covered by a subsequent material (outer-element or overmolded material) during the manufacturing process. Thereafter, a conventional tube forming process is used for assembling the tube body, the shoulder and the cap part.

In another embodiment, the method comprises a technique for injecting hot-melted HDPE resin onto a PET shoulder insert, subsequently, subjecting to a compression station in order to enhance bonding between PET and HDPE at the shoulder area. The tube container produced by using this hot-melted HDPE/PET shoulder is very useful for containing an oxidizing agent such as a permanent hair dye.

In another embodiment, a method according to this invention comprises a technique for dual-injection molding or double-shot molding of an injection machine. Consequently, the outer element and the inner element of the shoulder are tightly bonded.

According to this invention, the inner element is provided and made of a composition selected from the group comprising polycarbonate, cyclic olefin copolymers, polybutylene succinate, polyhydroxybutyrate, ethylene vinyl alcohol copolymers, polyacrylonitrile, ethylene vinyl acetate copolymers, polylactic acid, polyamides, polyester naphthalate, polyester such as PET or PBT.

In addition, the inner element is made separately by injection molding.

In some embodiments , the outer element forming composition is made of a composition selected from the group comprising polyolefins such as polypropylene, HDPE, a composition of HDPE and compatible polymers such as polyethylene copolymers, polypropylene copolymers.

In some embodiments, the outer element forming composition is made of a composition selected from the group comprising polyolefins and at least one of the following substances: cyclic olefin copolymers, polyamides, cyclic olefin polymers, polystyrene, ethylene vinyl alcohol copolymers.

According to another embodiment of this invention, the inner element and the outer element may be formed by dual-injection molding or double-shot molding of an injection machine.

In some embodiments, the tubular shoulder is formed such that the tubular shoulder has a diameter of16 to 50 mm, and/or a total thickness of 0.35 to 3.50 mm, wherein a thickness of the inner element may be varied from about 0.05 to 1.00 mm, and/or a thickness of the outer element may be varied from 0.30 to 2.50 mm.

In some embodiments, the tubular shoulder is for containing a product such as a permanent hair dye or a strong oxidizing agent or a hair dyeing product. Said contained product is contained in the tube structure, wherein said product comes into contact with an inside/inner portion of said tubular shoulder.

An example for performing the method according to this invention is a method for providing a tubular shoulder (insert molding) such that the method may be performed by the following details: disposing a finished inner element into a mandrel; thereafter, injecting a hot-melted outer element onto the inner element; then compressing the tubular shoulder by compression molding, in accordance with the appended claims.

Another example for performing the method according to this invention is a method for providing a tubular shoulder by using multi-shot molding such that the method may be performed by the following details: first-shot injecting of an inner element, then second-shot injecting of an outer element onto the inner element, in accordance with the appended claims.

There is an advantage of this invention to providing a tube container comprising a flexible laminated sheet and having a longitudinal hot-sealed seam and a non-metallic thermoplastic tube shoulder: product permeation and oxygen absorption through the tube shoulder are minimized. The in-mold assembly (IMA) method of the tube shoulder serving as a barrier is an inlay shoulder with the barrier qualities. This shoulder includes an outer element and an inner element. A process for producing the tube shoulder uses the in-mold assembly method, which is very useful for products containing a strong oxidizing agent.

The invention can be better understood with the help of the drawings.

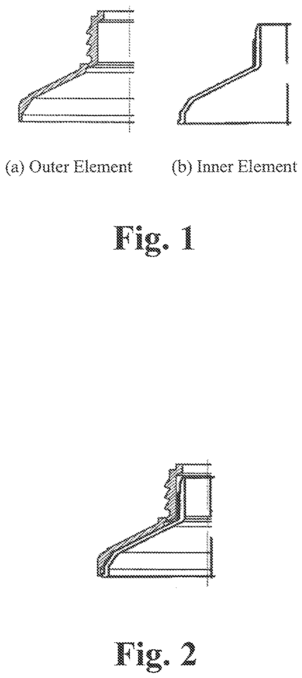

Fig.1 is a side view of an example of a tube shoulder including (a) an outer element and (b) an inner element.

Fig.2 is a side view of an example of the tube shoulder in this invention.

Table 1 shows one of critical points for a performance of the laminated tube container with different tube shoulder making process. A strong oxidizing agent such as a permanent hair dye is used for representing an aggressive product in the tube container. Both physical and chemical properties are taken into consideration for the overall performance of the packaging tube. Several types of the tube shoulder can not pass the test with the aggressive product. Only the tube shoulder produced according to this invention has passed the test with the aggressive product for at least one month in the laboratory oven. Turning to yellow or brown or deterioration of the tube shoulders can be seen in some types of the shoulders at the above conditions.

**Table 1: Tube container filled with hair dyeing product in laboratory oven at 50°C for 1 month**

| | | | | | | |
|---|---|---|---|---|---|---|
| Laminated Tube Packaging | Tube Shoulder | Commercial Hair Dye for Self-Using at Home | | | | |
| | | No.1 | No.2 | No.3 | No.4 | No.5 |
| | 1. Finished shoulder mounted with finished PET insert | turning to yellow at shoulder on day 7 | turning to yellow at shoulder on day 6 | turning to yellow at shoulder on day 5 | turning to yellow at shoulder on day 6 | turning to yellow at shoulder on day 6 |
| | 2. In-mold assembly method of tube shoulder according to this invention | passed (no change in appearance) for at least 1 month | | | | |

From the results as shown in the above table, the tube shoulder formed by the in-mold assembly method does not turn to yellow, and there is no overflowing of the product contained in the tube container. Therefore, it can be concluded that the tube shoulder produced according to this invention clearly has significant difference from those of the prior art: the tube shoulder produced according to this invention (1) is a simple, hygienic and safe form of a packaging, (2) has the design and uses materials suitably for chemical, cosmetic and pharmaceutical industries, (3) has the feature for reducing the absorption of product components contained therein that come into contact with the shoulder area, (4) is suitable for filling with contents of various products such as toothpastes, cosmetics, foodstuffs, medicines, and the like, and (5) it is capable of industrial applications.

## Claims

1. A method for producing a tubular shoulder comprising the following steps:
(1) preparing an inner element by injection molding of an inner-element forming composition in a first mold;
(2) disposing the formed inner element on a mandrel in a second mold;
(3) injecting an outer-element forming composition into the second mold, such that said composition is injected, while it is hot, onto the held inner element; and
(4) bonding the inner element and the outer element together by compression, while the outer element still has a high temperature,
wherein an output resulting from said molding is formed to be the tubular shoulder having the inner element and the outer element bonded together by the in-mold assembly method.

2. The method according to claim 1, wherein the inner-element forming composition is made of a composition selected from the group consisting of polycarbonate, cyclic olefin copolymers, polybutylene succinate, polyhydroxybutyrate, ethylene vinyl alcohol copolymers, polyacrylonitrile, ethylene vinyl acetate copolymers, polylactic acid, polyamides, polyester naphthalate, polyester including PET or PBT.

3. The method according to claim 1, wherein the outer-element forming composition is made of a composition selected from the group consisting of polyolefins including polypropylene, HDPE, a composition of HDPE and compatible polymers including polyethylene copolymers, polypropylene copolymers, or wherein the outer element is made of a composition selected from the group consisting of polyolefins and at least one of the following substances: cyclic olefin copolymers, polyamides, cyclic olefin polymers, polystyrene, ethylene vinyl alcohol copolymers.

4. The method according to any one of claims 1 to 3, wherein said tubular shoulder is formed such that said tubular shoulder has a diameter of 16 to 50 mm, and/or wherein said tubular shoulder is formed such that said tubular shoulder has a total thickness of 0.35 to 3.50 mm.

5. The method according to claim 4, wherein a thickness of the inner element is varied from 0.05 to 1.00 mm, and/or wherein a thickness of the outer element is varied from 0.30 to 2.50 mm.

6. The method according to any one of claims 1 to 5, wherein said tubular shoulder is suitable for containing a product such as a permanent hair dye or a strong oxidizing agent or a hair dyeing product, and wherein said product is containable in the tube structure, such that said product, when contained, comes into contact with an inside/inner portion of said tubular shoulder.

7. The method according to any preceding claim for providing a tube container comprising a flexible laminated sheet and having a longitudinal hot-sealed seam and a non-metallic thermoplastic tube shoulder.

## Patentansprüche

1. Verfahren zur Herstellung einer rohrförmigen Schulter, mit den folgenden Schritten:
(1) Vorbereiten eines inneren Elements durch Spritzgießen einer ein inneres Element bildenden Zusammensetzung in eine erste Form;
(2) Anordnen des gebildeten inneren Elements auf einem Dorn in einer zweiten Form;
(3) Einspritzen einer ein äußeres Element bildenden Zusammensetzung in die zweite Form, so dass die Zusammensetzung, während sie heiß ist, auf das gehaltene innere Element gespritzt wird; und
(4) Verbinden des inneren Elements und des äußeren Elements miteinander durch Pressen, während das äußere Element noch eine hohe Temperatur aufweist,
wobei ein aus dem Formen resultierendes Ergebnis als die rohrförmige Schulter ausgebildet ist, die das innere Element und das äußere Element aufweist, die durch das Montagespritzgießverfahren miteinander verbunden sind.

2. Verfahren nach Anspruch 1, wobei die ein inneres Element bildende Zusammensetzung aus einer Zusammensetzung hergestellt ist, die aus der Gruppe ausgewählt ist, die aus Polycarbonat, cyclischen Olefincopolymeren, Polybutylensuccinat, Polyhydroxybutyrat, Ethylenvinylalkoholcopolymeren, Polyacrylnitril, Ethylenvinylacetatcopolymeren, Polymilchsäure, Polyamiden, Polyesternaphthalat, Polyester einschließlich PET oder PBT besteht.

3. Verfahren nach Anspruch 1, wobei die ein äußeres Element bildende Zusammensetzung aus einer Zusammensetzung hergestellt ist, die aus der Gruppe ausgewählt ist, die aus Polyolefinen einschließlich Polypropylen, HDPE, einer Zusammensetzung aus HDPE und kompatiblen Polymeren einschließlich Polyethylencopolymeren, Polypropylencopolymeren besteht, oder wobei das äußere Element aus einer Zusammensetzung hergestellt ist, die aus der Gruppe ausgewählt ist, die aus Polyolefinen und mindestens einer der folgenden Substanzen besteht: cyclischen Olefincopolymeren, Polyamiden, cyclischen Olefinpolymeren, Polystyrol, Ethylenvinylalkoholcopolymeren.

4. Verfahren nach einem der Ansprüche 1 bis 3, wobei die rohrförmige Schulter so ausgebildet ist, dass die rohrförmige Schulter einen Durchmesser von 16 bis 50 mm aufweist, und/oder wobei die rohrförmige Schulter so ausgebildet ist, dass die rohrförmige Schulter eine Gesamtdicke von 0,35 bis 3,50 mm aufweist.

5. Verfahren nach Anspruch 4, wobei eine Dicke des inneren Elements zwischen 0,05 bis 1,00 mm variiert und/oder wobei eine Dicke des äußeren Elements zwischen 0,30 bis 2,50 mm variiert.

6. Verfahren nach einem der Ansprüche 1 bis 5, wobei die rohrförmige Schulter geeignet ist, ein Produkt wie ein permanentes Haarfärbemittel oder ein starkes Oxidationsmittel oder ein Haarfärbeprodukt zu enthalten, und wobei das Produkt in der Rohrstruktur aufnehmbar ist, so dass das Produkt, wenn es aufgenommen ist, mit einem Inneren/ inneren Abschnitt der rohrförmigen Schulter in Kontakt kommt.

7. Verfahren nach einem der vorhergehenden Ansprüche zur Bereitstellung eines Rohrbehälters mit einer flexiblen laminierten Folie und mit einer längsgerichteten, heißversiegelten Naht und einer nichtmetallischen, thermoplastischen Rohrschulter.

## Revendications

1. Procédé de production d'un épaulement tubulaire comprenant les étapes suivantes :
(1) préparer un élément interne par moulage par injection d'une composition formant un élément interne dans un premier moule ;
(2) disposer l'élément interne formé sur un mandrin dans un deuxième moule ;
(3) injecter une composition formant un élément externe dans le deuxième moule, de sorte que ladite composition est injectée, pendant qu'elle est chaude, sur l'élément interne maintenu ; et
(4) lier l'élément interne et l'élément externe ensemble par compression, alors que l'élément externe a toujours une température élevée,
dans lequel un débit résultant dudit moulage est formé pour être l'épaulement tubulaire ayant l'élément interne et l'élément externe liés ensemble par le procédé d'assemblage dans le moule.

2. Procédé selon la revendication 1, dans lequel la composition formant l'élément interne est composée d'une composition choisie dans le groupe constitué de polycarbonate, copolymères d'oléfine cyclique, succinate de polybutylène, polyhydroxybutyrate, copolymères d'éthylène - alcool vinylique, polyacrylonitrile, copolymères d'éthylène - acétate de vinyle, acide polylactique, polyamides, naphtalate de polyester, polyester y compris PET ou PBT.

3. Procédé selon la revendication 1, dans lequel la composition formant l'élément externe est composée d'une composition choisie dans le groupe constitué par les polyoléfines y compris le polypropylène, le HDPE, une composition de HDPE et de polymères compatibles y compris des copolymères de polyéthylène, des copolymères de polypropylène, ou dans lequel l'élément externe est composé d'une composition choisie dans le groupe constitué par les polyoléfines et au moins l'une des substances suivantes : copolymères d'oléfine cyclique, polyamides, polymères d'oléfine cyclique, polystyrène, copolymères d'éthylène - alcool vinylique.

4. Procédé selon l'une quelconque des revendications 1 à 3, dans lequel ledit épaulement tubulaire est formé de telle sorte que ledit épaulement tubulaire a un diamètre de 16 à 50 mm, et/ou dans lequel ledit épaulement tubulaire est formé de sorte que ledit épaulement tubulaire a une épaisseur totale de 0,35 à 3,50 mm.

5. Procédé selon la revendication 4, dans lequel une épaisseur de l'élément interne varie de 0,05 à 1,00 mm, et/ou dans lequel une épaisseur de l'élément externe varie de 0,30 à 2,50 mm.

6. Procédé selon l'une quelconque des revendications 1 à 5, dans lequel ledit épaulement tubulaire est approprié à contenir un produit tel qu'un colorant capillaire permanent ou un agent oxydant fort ou un produit de teinture capillaire, et dans lequel ledit produit peut être contenu dans la structure tubulaire, de telle sorte que ledit produit, lorsqu'il est contenu, entre en contact avec une partie intérieure/interne dudit épaulement tubulaire.

7. Procédé selon l'une quelconque des revendications précédentes pour la fourniture d'un récipient tubulaire comprenant une feuille stratifiée flexible et ayant une couture thermoscellée longitudinale et un épaulement tubulaire thermoplastique non métallique.
